# EUROPEAN PATENT APPLICATION

(11) **EP 4 625 840 A1**
(43) Date of publication of application: **01.10.2025**
(21) Application number: 25161223.0
(22) Date of filing: 03.03.2025
(51) Int. Cl.: H04B 7/185, G08G 5/26, G08G 5/27

(54) **GROUND STATION SELECTION LOGIC BETWEEN GROUPED GROUND TRANSMITTING STATIONS**

(30) Priority: 27.03.2024 IN 202411024488; 15.05.2024 US 202418664797
(71) Applicant: Honeywell International Inc., Charlotte, NC 28202 (US)
(72) Inventor: SRINIVASAN, Divya Swarup Giriyappa, Charlotte, 28202 (US); JUDD, Thomas D., Charlotte, 28202 (US); WEST, Stewart, Charlotte, 28202 (US); RAJADURAI, John Azariah, Charlotte, 28202 (US)
(74) Representative: Haseltine Lake Kempner LLP

(57) **Abstract**

Embodiments are directed to a communications management system on a vehicle configured to determine whether a ground transmitting station is a grouped ground transmitting station. In some embodiments, the communications management system is configured to select one or more primary ground transmitting stations for communicating a datalink message based on whether the ground transmitting station is a grouped ground transmitting station. In determining the presence of grouped ground transmitting stations, the vehicle can take advantage of the grouped ground transmission functionality offered by these entities when communicating datalink messages.

## Description

### CROSS-REFERENCE TO REPLATED APPLICATION

This application claims priority to Indian Provisional Patent Application No. 202411024488 filed on March 27, 2024, and titled "GROUND STATION SELECTION LOGIC BETWEEN GROUPED GROUND TRANSMITTING STATIONS", the contents of which are incorporated herein by reference in their entirety.

### BACKGROUND

In the aerial navigation context, aircraft communicate with external entities before takeoff, during navigation, and upon arriving at a destination. For example, aircraft send and receive messages from one or more ground transmitting stations when the aircraft is approaching a landing site. Modern aircraft utilize Aircraft Communication Addressing and Reporting Systems (ACARS) for sending ACARS messages to the ground transmitting station and for receiving an ACARS message from a ground transmitting station. These messages are typically represented to the aircraft in the form of text datalink messages that are displayed on an avionics device associated with the aircraft.

Each ground station entity is traditionally associated with its own address. Thus, when an aircraft traverses a geographical location where multiple ground transmitting stations are present, the aircraft perceives each ground transmitting station as a separate entity within its range. However, developments to ground transmitting station operation are currently underway. In future ground station operation, multiple ground transmitting stations will be configured to share the same network address even though each ground transmitting station will be located in a different physical area. A ground transmitting station that shares the same identifying network information as another ground transmitting station, but resides in a different physical location than the location of the ground transmitting station it shares identical identification information with, is referred to as a "grouped ground transmitting station" or grouped GTS. Each group of ground transmitting stations sharing the same addressing information (e.g., network address) will be perceived by the aircraft as a single ground transmitting station.

In future implementations, these grouped ground transmitting stations will likely be implemented along with existing ground transmitting station architectures, meaning that a geographical location comprising multiple ground station entities (for example, an airport or other destination/takeoff site) will include both grouped ground transmitting stations and traditional ground station entities. However, current aircraft ground selection logic does not account for whether a ground transmitting station has this grouped transmitting functionality. As a result, an aircraft may select a sub-optimal ground transmitting station, which may introduce connectivity problems, message delays, and other communication problems that a vehicle moving at high speeds and high altitudes would best avoid during navigation.

### SUMMARY

The details of one or more embodiments are set forth in the description below. The features illustrated or described in connection with one exemplary embodiment may be combined with the features of other embodiments. Thus, any of the various embodiments described herein can be combined to provide further embodiments. Aspects of the embodiments can be modified, if necessary to employ concepts of any various patents, applications and publications as identified herein to provide yet further embodiments.

In one embodiment, a system is disclosed. The system comprises a communications management system configured to be coupled on a vehicle. The communications management system comprises processing circuitry configured for processing datalink messages received from at least one ground transmitting station. The communications management system is configured to determine whether the at least one ground transmitting station comprises identical identification information associated with another ground transmitting station. The communications management system is configured to evaluate the at least one ground transmitting station based on at least one criterion for the at least one ground transmitting station. Based on the evaluation of the at least one ground transmitting station, the communications management system is configured to select one or more primary ground transmitting stations for communicating a datalink message with the vehicle.

In another embodiment, a communications management system is disclosed. The communications management system is configured to be mounted on a vehicle. The communications management system comprises at least one processor configured for routing downlink datalink messages received from at least one avionics device and uplink datalink messages received from at least one ground transmitting station. The communications management system is configured to determine whether the at least one ground transmitting station comprises identical identification information associated with another ground transmitting station. The communications management system is configured to evaluate the at least one ground transmitting station based on at least one criterion for the at least one ground transmitting station. The communications management system is configured to select one or more primary ground transmitting station for communicating a datalink message with the vehicle based on the evaluation of the at least one ground transmitting station.

In yet another embodiment, a method for selecting one or more primary ground transmitting stations for communicating datalink messages with a vehicle is disclosed. The method comprises determining that at least one ground transmitting station comprises identical identification information associated with another ground transmitting station. The method comprises evaluating the at least one ground transmitting station based on at least one criterion for the at least one ground transmitting station. The method comprises selecting the one or more primary ground transmitting stations for communicating a datalink message with the vehicle based on the evaluation of the at least one ground transmitting station.

### BRIEF DESCRIPTION OF THE DRAWINGS

Understanding that the drawings depict only exemplary embodiments and are not therefore to be considered limiting in scope, the exemplary embodiments will be described with additional specificity and detail through the use of the accompanying drawings, as subsequently described and as described in the detailed description.
Figure 1 depicts a block diagram of a system including a vehicle communicating with multiple ground transmitting stations, as described in one or more embodiments.
Figure 2 depicts a block diagram of a communications management system onboard a vehicle, as described in one or more embodiments.
Figures 3-4 depict flow diagrams of methods for determining whether a ground transmitting station is a grouped ground transmitting station, as described in one or more embodiments.
Figures 5A-5C depict flow diagrams of methods for selecting one or more primary ground transmitting stations for communicating datalink messages, as described in one or more embodiments.
Figure 6 depicts a flow diagram of a method for selecting one or more primary ground transmitting stations incorporating the techniques of Figures 1-5, as described in one or more embodiments.
In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the methods presented in the drawing figures and the specification are not to be construed as limiting the order in which the individual steps may be performed. The following detailed description is, therefore, not to be taken in a limiting sense.

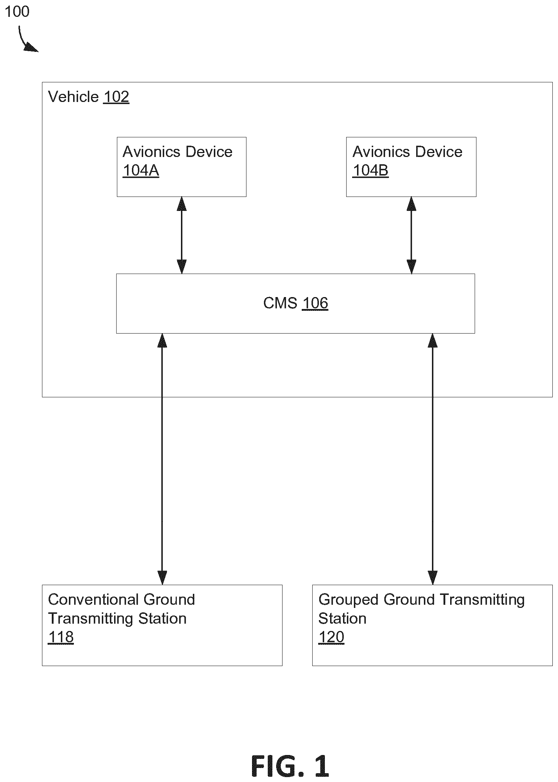

Figure 1 depicts a block diagram of a system 100 including a vehicle communicating with multiple ground transmitting stations. The ground transmitting stations are represented as at least one conventional ground transmitting station 118 and at least one grouped ground transmitting station 120 in Figure 1. For pedagogical explanation, one vehicle 102 and two ground transmitting stations 118, 120 are shown in Figure 1, understanding that any number of vehicles 102 and ground transmitting stations 118, 120 can form part of the system 100.

Use of the term "vehicle" is not intended to be limiting and includes all classes of vehicles configured for datalink communication that fall within the ordinary meaning of the term. Throughout the disclosure, the vehicle 102 is further illustrated as an aircraft understanding that the principles described herein apply to other vehicles where applicable.

Vehicle 102 includes at least one avionics device 104A, 104B coupled to a communications management system (CMS) 106. For pedagogical explanation, two avionics devices 104A, 104B are shown in Figure 1. Avionics devices 104A, 104B can be an onboard avionics device that is affixed to (for example, mounted on) the interior of the vehicle, such as the cockpit or electronic equipment (EE) bay. Alternatively, avionics device 104A, 104B is an offboard avionics device that is portable and can be taken on and off the vehicle. Examples of onboard and offboard avionics devices include a navigational display device, a primary flight display, a Maintenance Terminal, a Cabin terminal, an electronic flight bag (EFB), flight management system, Aircraft condition monitoring system, or a tablet, smartphone, or other portable electronic device (PED) that is configured for running one or more avionics applications with a display or interface. Some of the avionics devices 104A, 104B include at least one human-machine interface (HMI) that is configured to display and visualize data to the vehicle personnel (for example, operator and flight crew), and also enables the personnel to input or select data. For example, the HMI includes or is coupled to any kind of input device (computer mouse, buttons, switches, keyboard, curser control device, display, and the like). In some examples, the HMI includes a screen with touchscreen functionality or cursor selection capability so that the vehicle personnel can input data directly on the screen. Alternatively, the avionics devices 104A, 104B do not include an individual human-machine interface and instead interface to one or more HMIs implemented on the vehicle 102 (which can be shared between different avionics devices).

Each avionics device 104A, 104B is coupled to CMS 106, e.g., through a wired or wireless connection or intermediate system (such as an AID (Aircraft Interface Device)). CMS 106 is configured to send downlink messages initiated by an avionics device 104A, 104B, and receive uplink messages from a ground transmitting station 118, 120. Optionally, each avionics device 104A, 104B registers with the CMS 106 before the avionics device 104A, 104B receives or transmits data to CMS 106. In some examples, CMS 106 is configured to generate downlink messages independently of the avionics devices 104A, 104B. CMS 106 is or includes a communications management unit (CMU) or implemented as a communications management function (CMF) executed by one or more processors.

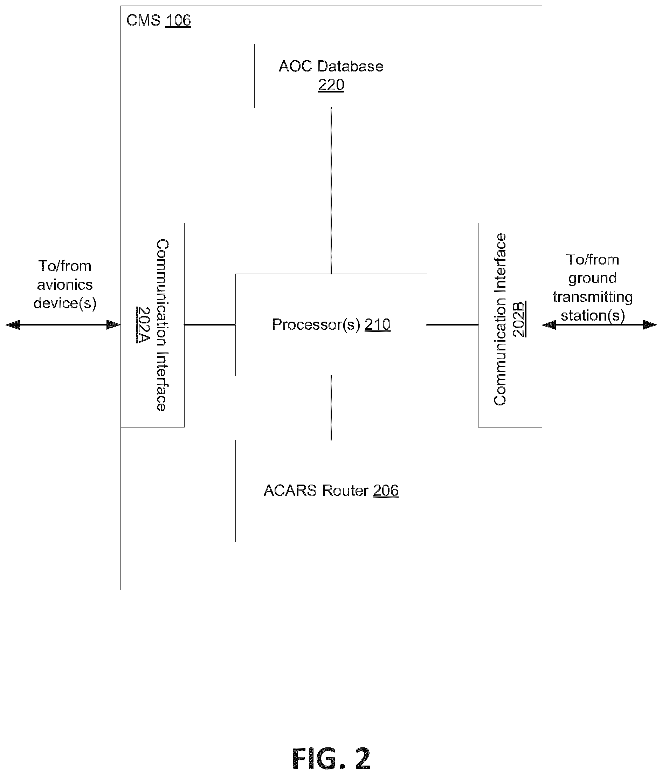

One embodiment of a CMS 106 is depicted in Figure 2. CMS 106 generally acts both as a datalink manager to manage datalink messages sent from the vehicle 102 to the ground transmitting stations 118, 120, as well as a router to route datalink messages sent from a ground transmitting station 118, 120 to the appropriate receiving entity, namely one of the avionics devices 104A, 104B. When an avionics device 104A, 104B generates a downlink message, the message is received at communication interface 202A of the CMS 106. The communication interface 202A is, in an embodiment, an ARINC 619 (A619) interface. An ACARS router 206 determines which of the ground transmitting stations 118, 120 the downlink message should be transmitted to. When the downlink message is ready to be transmitted, it is output from communication interface 202B (e.g., an ARINC A618 interface) to the intended ground transmitting station(s) 118, 120 via an appropriate communication link. Example communication links are a high frequency (HF) link, a very high frequency (VHF) link, and a satellite communications (SATCOM) link. For some of these communication links, a datalink service provider is used to provide the downlink message to the ground transmitting station 118, 120. In the uplink direction, one of the ground transmitting stations 118, 120 generates and transmits a message to the vehicle 102 which is received (e.g., from the datalink service provider) at communication interface 202B. After processing the uplink message, communication interface 202A receives the message and transmits it to the appropriate avionics device 104A, 104B.

To process downlink and uplink datalink messages, CMS 106 includes one or more processors 210 coupled to the communication interfaces 202A, 202B. Processor 210 is configured for processing, transmitting, and optionally generating datalink messages based on one or more datalink protocols supported by vehicle 102. In the embodiment of Figure 2, CMS 106 can include an aircraft operational control (AOC) database 220, which stores data that includes identifying information about ground transmitting stations 118, 120 that communicate with the vehicle 102, datalink protocols supported by these ground transmitting stations, and other information. For example, when processor 210 receives a downlink message from one of the avionics devices 104A, 104B, processor 210 can determine which ground transmitting station(s) 118, 120 the message is intended for. When the CMS 106 receives an uplink message from one of the ground transmitting stations 118, 120, processor 210 analyzes indicators (e.g., the label or sublabel) of the message and then determines which avionics device 104A,104B the message is intended for.

Referring to Figure 1, each ground transmitting station 118, 120 is a ground entity that is configured to communicate with vehicle 102. Each ground transmitting station 118, 120 comprises one or more transmitters and receivers that send and receive messages from a vehicle. In some examples, each ground transmitting station 118, 120 includes, or is coupled to, a ground end system with processing circuitry that generates and processes datalink messages. Multiple ground transmitting stations can correspond to an airport or landing site, or may correspond to different landing sites. A ground transmitting station can be implemented as a central system and/or can be distributed as multiple systems in a terrestrial network.

As vehicle 102 navigates enroute to a destination site, it may come into range with one or more ground transmitting stations. Some of the ground transmitting stations are conventional ground transmitting stations 118. Each of these conventional ground transmitting stations 118 are located in different physical locations and are associated with their own respective network locations in a ground terrestrial network. That is, one conventional ground transmitting station 118 will have a network address that is different from the network address of another conventional ground transmitting station 118. However, some of the ground transmitting stations within range of vehicle 102 may include grouped ground transmitting stations 120. These ground transmitting stations 120 differ from their conventional counterparts by their ability to share the same network identification information as other grouped transmitting stations 120. Specifically, these grouped ground transmitting stations 120 are configured with the same network address as other associated transmitting stations, even though each grouped ground transmitting station 120 is in a different physical location than another grouped transmitting station sharing the same network address. That is, a grouped transmitting station 120 can be associated with multiple transmitters in different physical locations spread over a geographical area. In many (but not all) instances, connecting to these grouped ground transmitting stations 120 is advantageous to communicate with over a conventional ground transmitting station 118 because it generally reduces the risk of loss of connectivity (e.g., during handoff to another grouped ground transmitting station 120) and retransmissions. For example, when vehicle 102 attempts to communicate a message with a grouped ground transmitting station 120 but fails due to connectivity issues (e.g., the vehicle 102 is now out of range), the message can be received by another grouped ground transmitting station 120 that is in range of vehicle 102 and processes the message as if the vehicle 102 had intended to transmit the message to the other grouped ground transmitting station 120. Some grouped ground transmitting stations 120 can be associated with different groups, so that one group of ground transmitting stations 120 share the same network identification information but may not share the same network identification information as another group of ground transmitting stations 120.

While vehicles generally include ground selection logic for determining which ground transmitting station 118 to communicate with, current vehicles are not equipped for determining if a ground transmitting station is configured for grouped ground transmission functionality. Furthermore, vehicles are not equipped with dynamic ground selection logic that determines in which situations it is preferable to communicate with a grouped ground transmitting station 120 and in which situations it is more preferable to communicate with a conventional ground transmitting station 118.

The methods and techniques described herein enable a vehicle 102 to account for whether a ground transmitting station is configured as part of a group of transmitting stations when selecting a primary ground transmitting station to communicate with. In doing so, a vehicle 102 can utilize the benefits of grouped ground transmitting functionality when advantageous, but can also consider other parameters in a holistic manner in situations where the ground transmitting station may not be the most preferred entity to communicate with.

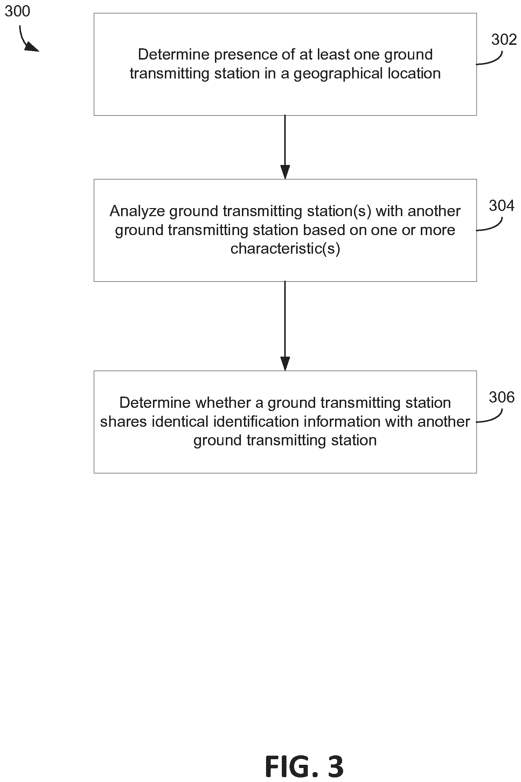

Figure 3 depicts a flow diagram of one example of a method for determining a grouped ground transmitting station. Method 300 (and the additional methods presented herein) are described in the context of the systems described in Figures 1-2, but can be executed in other systems as well. Specifically, method 300 (and the additional methods presented herein) are described in the context of a CMS 106 coupled onboard a vehicle 102, but may be executed in part or in whole by other processing circuitry and systems on the vehicle 102. The blocks of the flow diagram have been arranged in a generally sequential manner for ease of explanation; however, it is to be understood that this arrangement is merely exemplary, and it should be recognized that the processing associated with the methods described herein (and the blocks shown in the Figures) may occur in a different order (for example, where at least some of the processing associated with the blocks is performed in parallel and/or in an event-driven manner). Also, most standard exception handling is not described for ease of explanation; however, it is to be understood that these methods can and typically would include such exception handling.

Method 300 includes determining the presence of at least one ground transmitting station in a geographical location at block 302. There are a variety of different techniques that can be utilized. For example, CMS 106 can be configured to determine the signal strength from a signal received from a ground transmitting station 118, 120. If the signal strength of the received signal exceeds a minimum threshold, then CMS 106 determines that the ground transmitting station 118, 120 is in range and present near the position of the vehicle 102. In some embodiments, the signal strength is averaged over a period of time and the average signal strength is used to determine the presence of the ground transmitting station 118, 120. As another example, the CMS 106 may receive a datalink message from a ground transmitting station 118, 120 and determine, either from the contents of the message or from the event of receiving the message, that the ground transmitting station 118, 120 is within range of the vehicle 102. Yet another example includes vehicle 102 having some *a priori* knowledge of the location of the ground transmitting station 118, 120, which can be determined from the information stored in AOC database 220.

Proceeding to block 304, method 300 analyzes the ground transmitting station with another ground transmitting station based on one or more characteristics. For example, when CMS 106 receives a message from a ground transmitting station 118, 120, CMS 106 is configured to analyze one or more characteristics of the message to determine whether the ground transmitting station 118, 120 that sent the message is a grouped ground transmitting station 120 and hence, that it shares identical information with another ground transmitting station. Some exemplary characteristics are described below.

*Message Frequency.* Some datalink messages that need to be communicated to the aircraft come at regular intervals. For example, many ground transmitting stations 118, 120 broadcast ground station information frames (GSIFs) at a defined rate that can be received by aircraft in range. These GSIFs include information on the ground transmitting station address, availability to communicate with vehicles, and the datalink capabilities supported by the ground transmitting station. Therefore, CMS 106 can be configured to monitor the frequency (i.e., the rate) of messages received from a ground transmitting station 118, 120. Depending on the implementation of the grouped ground transmitting station 120, the ground stations with grouped transmitting functionality may transmit or broadcast messages at substantially different rates than from conventional ground transmitting stations 118. In some cases, the message frequency of messages transmitted by a grouped ground transmitting station 120 will be higher than the frequency of messages from a conventional ground transmitting station 118. If the message frequency is higher than a threshold value (e.g, faster than two minutes), then CMS 106 determines that the ground transmitting station that sent the messages is part of a group of transmitting stations 120.

Additionally, or alternatively, the information from received GSIFs corresponding to one or more ground transmitting stations can be used in determining whether a ground transmitting station has grouped transmitting functionality. As previously noted, GSIFs broadcasted from ground transmitting stations include information such as (but not limited to) the ground transmitting station address, availability to communicate with vehicles, and the datalink capabilities supported by the ground transmitting station, along with the other characteristics listed below. Any of the information present in these GSIFs can be considered and analyzed as part of whether a respective ground transmitting station broadcasting a received GSIF has grouped transmitting functionality. For example, method 300 can analyze a network address of a received GSIF from a ground transmitting station to determine that the ground transmitting station is a grouped transmitting station with multiple transmitters in different physical locations.

*Rate*/*variation of Signals.* The characteristics previously described relate to parameters of messages that CMS 106 receives from at least one ground transmitting station. Additionally, or alternatively, CMS 106 can determine whether a ground transmitting station 118, 120 is a grouped transmitting station 120 based on characteristics of received signal strength. In some embodiments, CMS 106 is configured to determine the signal strength of a received signal or an average signal strength of signals received over a period of time from a ground transmitting station 118, 120. CMS 106 can determine that a ground transmitting station 118, 120 is a grouped ground transmitting station 120 based on an analysis of the signal strength of the signals. Since each conventional ground transmitting station 118 is associated with its own network address and physical location, the signal strength attributed to such a ground entity would change based on the anticipated navigation trajectory of the vehicle 102. For example, if the vehicle 102 is traveling away from the ground transmitting station 118, then the signal strength from signals received from that ground transmitting station 118, 120 would likely decrease gradually as the vehicle 102 continues to travel away. However, since a grouped ground transmitting station 120 is associated with multiple physical locations (the locations of each ground station that shares the same network address as the grouped ground transmitting station 120), the rate or variation of the signal strength associated with the ground transmitting station 120 may change drastically. This is because, as the vehicle is traveling from one grouped ground transmitting station 120, the signal strength may suddenly jump to a much stronger value when the vehicle 102 approaches another grouped ground transmitting station 120 located in a different physical location much closer to the vehicle 102. Therefore, in some embodiments CMS 106 is configured to compare the rate or variation of signal strength associated with a ground transmitting station 118, 120 to a threshold value. If the rate or variation of the signal strength exceeds the threshold value, either because the rate substantially increases or decreases, CMS 106 determines that the ground transmitting station 118, 120 is a grouped ground transmitting station 120.

*Servicer Provider Compatibility.* As previously noted, in many instances, a vehicle 102 utilizes a datalink service provider to send a message to a ground transmitting station when sending a message over a communication link such as an HF, VHF, or SATCOM link. Likewise, a ground transmitting station 118, 120 utilizes a datalink service provider when sending an uplink message over one of these communication links to vehicle 102. In some embodiments, CMS 106 is configured to determine that a ground transmitting station 118, 120 is a grouped ground transmitting station 120 based on the datalink service provider and/or communication link used to send the message. Some datalink service providers may support communication with grouped ground transmitting stations 120 for each type of communication link or with selected communication links utilized by the datalink service provider, while others may not support grouped ground transmitting station 120 communication entirely. Knowing whether the datalink service provider supports communication with a grouped ground transmitting station 120 may be an indicator that a ground transmitting station 118, 120 is a grouped ground transmitting station 120 when CMS 106 receives a message from the ground transmitting station 118, 120. Such information can be stored in AOC database 220 so that when CMS 106 receives an uplink datalink message, it can look up whether the datalink service provider and/or communication link supports communication from grouped ground transmitting stations 120. If the datalink service provider and/or communication link matches the information stored in AOC database 220, then CMS 106 can use that information to determine that the ground transmitting station 118, 120 that sent the message is a grouped ground transmitting station 120 (or is not).

*Database Indicators.* Referring to Figure 2, in some embodiments CMS 106 includes an AOC database 220 (which can be represented as other types of databases) that stores identifying information of known ground transmitting stations 118, 120. Such a database can be periodically updated as new ground transmitting stations 118, 120 are implemented. For example, the vehicle 102 may form part of a network in which ground transmitting station lists are received by another network element, which can be updated as vehicle 102 departs from a landing site or upon landing. Therefore, in some embodiments the AOC database 220 can include information on which ground transmitting stations 118, 120 are identified as grouped ground transmitting stations 120. In some embodiments, information stored in AOC database 220 includes historical information of activities associated with the ground transmitting station 118, 120. For example, such information includes a log of prior actions and events issued by the ground transmitting station 118, 120 (e.g., datalink message history, maintenance history, station alerts and notices, etc.). Some of these actions/activities may only be performed, or more likely to be performed, by a grouped ground transmitting station 120 as part of its grouped ground transmitting functionality. When one of these ground transmitting stations 118, 120 comes into range of the vehicle 102, CMS 106 can automatically determine that the ground transmitting station 118, 120 is a grouped ground transmitting station 120 by accessing and optionally analyzing the information stored in AOC database 220.

*Message Content.* In some embodiments, a ground transmitting station 118, 120 can be identified as a grouped ground transmitting station 120 from the content of the message. While a datalink message may explicitly designate a ground transmitting station 118, 120 as one that supports grouped ground transmitting functionality, in some cases the determination of whether a ground transmitting station 118, 120 is a grouped ground transmitting station 120 even when no explicit indicators are present. For example, CMS 106 can be configured to identify whether a ground transmitting station 118, 120 is a grouped ground transmitting station 120 based on information embedded in a message. Such information can be extracted from CMS 106 which indicates to the CMS 106 that the originator of the message is a grouped ground transmitting station 120.

Referring to Figure 3, method 300 proceeds from block 304 to block 306 and determines whether the ground transmitting station shares identical identification information with another ground transmitting station. Based on any of the characteristics previously described, optionally in combination with other information (e.g., the navigation parameters of the vehicle including attitude, heading, velocity, flight path, etc.), CMS 106 determines whether the ground transmitting station 118, 120 is a grouped ground transmitting station 120. If so, CMS 106 can then undergo a selection process to determine whether the grouped ground transmitting station 120 (or an equivalent ground entity) should be selected as a primary ground transmitting station (as further described).

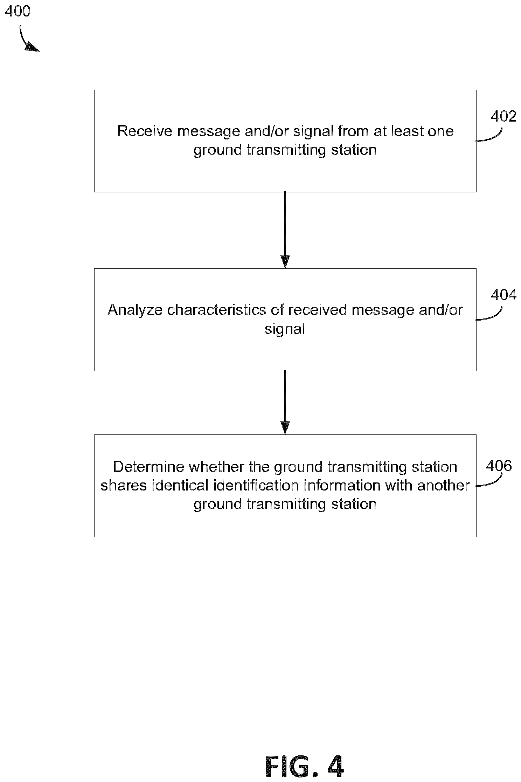

Figure 4 depicts a flow chart of a method 400 for determining whether at least one ground transmitting station is configured for grouped ground transmitting functionality. As subsequently described, method 400 is an example of the method 300 and utilizes the same processing executed with respect to method 300. Method 400 includes receiving a message and/or signal from at least one ground transmitting station at block 402. This function corresponds to block 302 of method 300, in which the message and/or signal is used by the CMS 106 to determine the presence of the at least one ground transmitting station 118, 120.

Proceeding to block 404, method 400 analyzes characteristics of the received message and/or signal received from the at least one ground transmitting station. The characteristics can include those described with respect to method 300. Additionally, or alternatively, characteristics of a received signal or signals can be analyzed, including the rate or variation of the signal strength associated with the at least one ground transmitting station. Other characteristics can also be analyzed.

Method 400 then proceeds to block 406 and determines whether the at least one ground transmitting station shares identical identification information with another ground transmitting station. For example, the analysis of the characteristics of the message (e.g., from a GSIF) and/or signal can indicate that the at least one ground transmitting station includes identical addressing information as another ground transmitting station, in which case the at least one ground transmitting station can be designated as a grouped ground transmitting station.

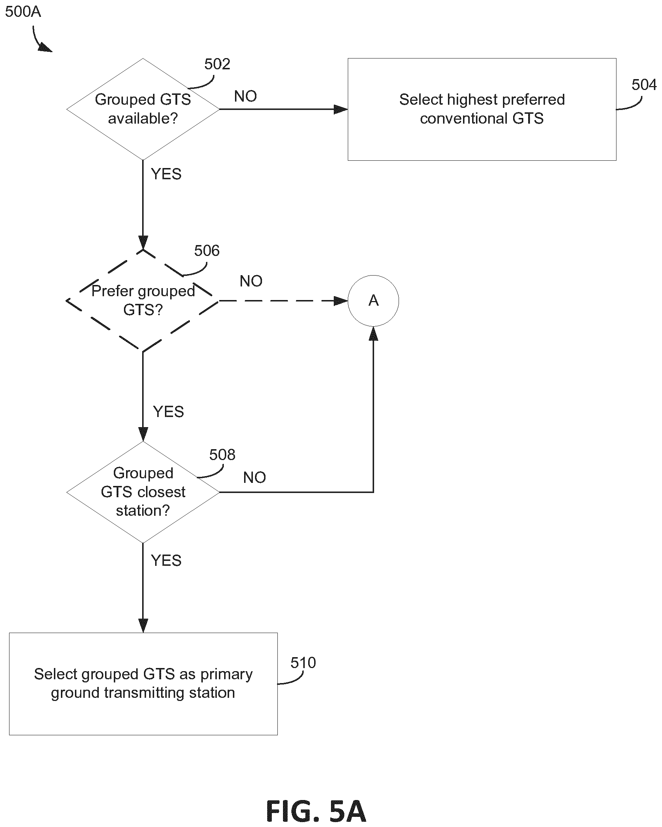

Figures 5A-5C depict flow diagrams of methods for selecting a primary ground transmitting station for communicating a datalink message. Methods 500A-500C are described as performed in sequence; however, the processing described in these methods is exemplary and hence the ground selection processing can be performed with a different logic flow than what is shown and described with respect to these methods. As used herein, a "primary ground transmitting station" refers to a highest preferred ground transmitting station for communicating datalink messages with the vehicle 102. Other ground transmitting stations can be ranked in preference by the CMS 106 based on an order of priority, in which the ground transmitting station with the highest priority is the primary ground transmitting station, with other ground transmitting stations ranked lower in priority.

Referring first to Figure 5A, method 500A includes determining whether a grouped ground transmitting station (GTS) is available at block 502. For example, CMS 106 can determine whether a grouped GTS is available based on the presence of at least one grouped GTS 120 in range of the vehicle 102 as described with respect to Figures 3-4. If no grouped GTS 120 are available, then method 500A proceeds from block 502 to block 504 and selects the highest preferred conventional ground transmitting station 118 as the primary ground transmitting station. When no grouped GTS 120 are available, the highest preferred conventional GTS 118 can be determined based on the signal strength of each ground transmitting station 118, 120 in range of the vehicle, e.g., by selecting the ground transmitting station 118, 120 with the highest average signal strength.

If at least one grouped GTS is available, then method 500A optionally determines whether the grouped GTS is preferred at block 506. In some embodiments, CMS 106 automatically prefers a grouped GTS 120 over a conventional ground transmitting station 118 due to the advantages provided by a grouped GTS 120. However, block 506 is optional because, in some situations (depending on criteria such as the location or distribution of ground transmitting stations 118, 120, the number or distribution of grouped GTS 120, the navigation parameters of the vehicle 102), a grouped GTS 120 may not be best suited for communication with the vehicle 102. If a grouped GTS is preferred, then method 500A proceeds from block 506 to block 508; otherwise method 500A proceeds to indicator A as further described in method 500B. If block 506 is not implemented, then method 500A proceeds from block 502 to block 508.

At block 508, method 500A determines whether the grouped GTS is the closest ground transmitting station. This determination can be made based on the signal strength of the signals associated with the grouped GTS. Since each associated grouped GTS 120 shares the same network address, the grouped GTS 120 with a physical location that is closest to the vehicle 102 will have the strongest signal strength of the other grouped GTS 120 that share the same network address. From the perspective of the vehicle 102, however, each associated grouped GTS 120 will be represented as a single ground transmitting station, with signal strength measurements determined by the physical location with the highest signal strength. If a grouped GTS is determined to be the closest ground transmitting station at block 508, then method 500A selects the grouped GTS as the primary ground transmitting station at block 510.

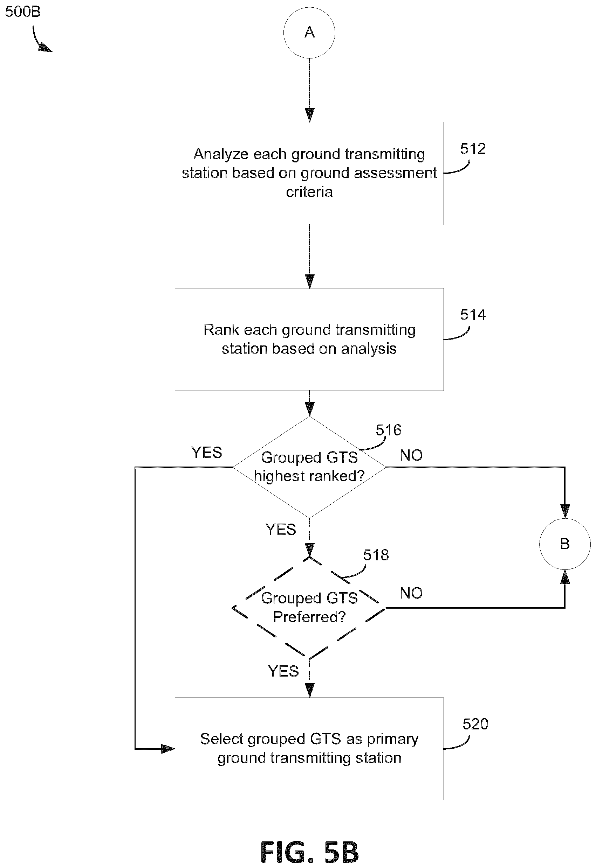

In some embodiments, a grouped GTS 120 will not be the ground transmitting station that the vehicle 102 perceives as closest, and/or a grouped GTS 120 may not be an automatically preferred ground transmitting station. In these situations, the CMS 106 can undergo a multivariable assessment process to determine whether a grouped GTS 120 should be selected as a primary ground transmitting station over a conventional ground transmitting station 118. One example of such a process is shown by the method 500B depicted in Figure 5B. Method 500B begins from indicator A as shown in method 500A and proceeds to block 512 by analyzing each ground transmitting station based on ground assessment criteria. As noted above, an analysis can be performed via machine learning techniques, using such processing architectures as one or more artificial neural networks. Other processing methods can also be used to assess each ground transmitting station based on a set of given ground assessment criteria. Some exemplary ground assessment criteria are subsequently described, understanding that other criteria relevant to datalink communication between the ground transmitting station and the vehicle can be used.

*Signal Strength.* As noted in the context of determining the presence of a grouped GTS 120, the signal strength of signals received from the ground transmitting station 118, 120 can be used to indicate whether the ground transmitting station 118, 120 should be selected as a primary ground transmitting station. If the signal strength (or other parameter such as the average signal strength) is sufficiently high so as to exceed a set threshold, the ground transmitting station 118, 120 is deemed more favorable to communicate with. In some embodiments, the rate/variation of the received signals is also analyzed. Thus, a ground transmitting station 118, 120 associated with high signal strength is more likely to be selected as the primary ground transmitting station than a ground transmitting station 118, 120 with low signal strength.

*Datalink Service Provider Preference.* The datalink service provider preference(s) of the vehicle can also be taken into account when assessing a ground transmitting station. If a ground transmitting station 118, 120 is associated with (e.g., supports) a particular datalink service provider that is preferred by the vehicle 102 when utilizing datalink communication, such a ground transmitting station 118, 120 is weighted higher than a ground transmitting station 118, 120 that does not support a preferred datalink service provider.

*Geographical Region.* In some embodiments, the geographical region associated with the ground transmitting station 118, 120 is used. For example, if the ground transmitting station 118, 120 is located in a region with low signal interference, then the ground transmitting station 118, 120 is weighted higher than if the ground transmitting station 118, 120 is located in a region where communication more difficult (e.g., due to known or reported loss of connectivity in the geographical region).

*Datalink Message Content.* When a datalink message is received from the ground transmitting station 118, 120, the ground transmitting station 118, 120 can be assessed based on the contents of the uplink datalink message. For example, if the datalink message indicates that the ground transmitting station 118, 120 is a grouped GTS 120, the ground transmitting station is generally more favored than a ground transmitting station without grouped ground transmission functionality. In some embodiments, CMS 106 identifies that the ground transmitting station 118, 120 is configured for grouped ground transmission functionality based on information embedded in an uplink datalink message, even without explicit indicators in the message text. Upon determining that the ground transmitting station 118, 120 is a grouped GTS 120, CMS 106 then assigns greater weight to the grouped GTS 120 when selecting a primary ground transmitting station.

*Vehicle Navigation Parameters.* Additionally (or alternatively) to the criteria previously listed, the navigation parameters of the vehicle 102 are used to assess a given ground transmitting station 118, 120. For example, parameters such as the altitude, ascent/descent rate, velocity, navigation trajectory, and other parameters characterizing the navigation state of the vehicle are used. A ground transmitting station 118, 120 indicated as being closer or intersecting with the navigation trajectory of the vehicle 102 will be given higher preference than a ground transmitting station 118, 120 that the vehicle 102 is moving away from. Also, the orientation of the vehicle 102 as defined by a coordinate system may impact the favorability of a given ground transmitting station 118, 120, for example, depending on the positioning of the communication equipment (e.g., RF transceivers, antennas, etc.) of the vehicle 102.

*Terrain Features.* In some embodiments, the vehicle 102 may detect or otherwise be aware of certain features on the terrain that may impede communication with a ground transmitting station 118, 120. Structural limitations such as mountain ranges, oceans, and airport terminals may interfere with signal transmission to the ground transmitting station 118, 120. Conversely, manmade structures such as airport terminals may indicate that a high density of ground transmitting stations are present, which in some circumstances favor a ground transmitting station 118, 120.

Referring back to Figure 5B, after analyzing each ground transmitting station at block 512, method 500B ranks each of the ground transmitting stations based on the analysis of the ground assessment criteria at block 514. In some embodiments, method 500B generates a list that organizes each ground transmitting station 118, 120 based on a numerical score, with the highest scoring ground transmitting station 118, 120 set on one end of the list and the lowest scoring ground transmitting station 118, 120 set on the opposite end. At block 516, method 500B then determines whether a grouped GTS is the highest ranked ground transmitting station. If so, then method 500B proceeds to block 520 and selects the grouped GTS as the primary ground transmitting station. Optionally, method 500B proceeds to block 518 and determines whether a grouped GTS is preferred by the vehicle. In many (but not all) circumstances, a grouped GTS 120 is preferred by the vehicle, in which case method 500B proceeds to block 520 as previously described.

However, in some embodiments, a grouped GTS 120 may not be the highest ranked ground transmitting station 118, 120 as a result of the analysis, and/or may not be a type of ground transmitting station 118, 120 that is preferred by the vehicle 102. Consequently, method 500B can proceed from block 516 or from block 518 to indicator B as shown in Figure 5B. At this stage, method 500B may undergo a subsequent analysis of each ground transmitting station 118, 120 to determine if a different ground transmitting station (other than the highest ranked ground transmitting station determined at block 516) should be selected as a primary ground transmitting station. For example, in some embodiments (e.g., where the grouped GTS 120 is not a highest ranked ground transmitting station), a grouped GTS 120 may nonetheless be more optimal to communicate, even though, for example, it may have a lower average signal strength than another ground transmitting station. Alternatively, there are some circumstances where a conventional ground transmitting station 118 is more optimal to communicate with than a grouped GTS 120 (even where the grouped GTS 120 is highest ranked).

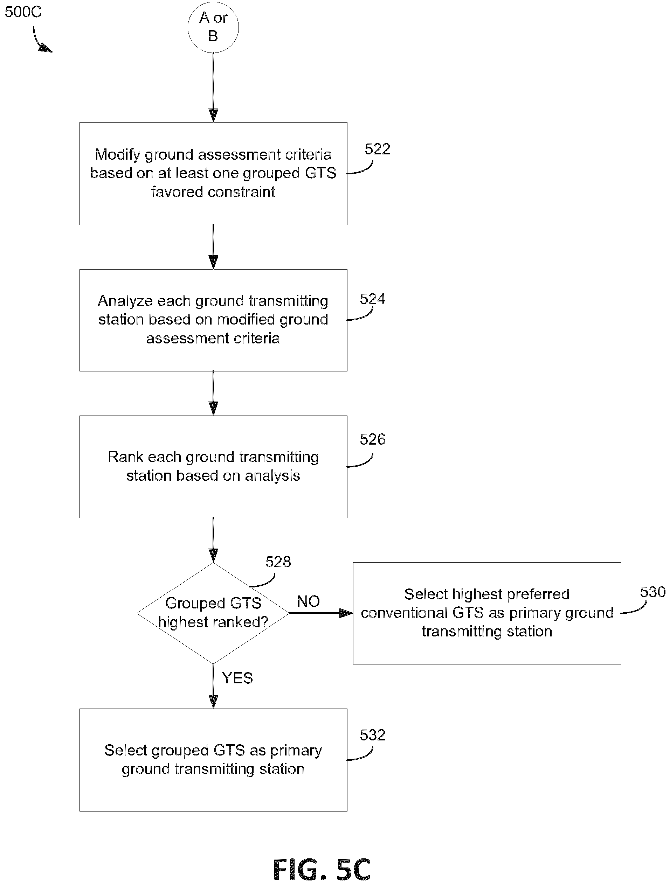

One example of conducting a modified ground assessment analysis is depicted as shown by method 500C in Figure 5C. While in some embodiments method 500C can be performed after conducting an initial (unmodified) ground assessment analysis, in other embodiments, method 500C can be performed directly after proceeding to indicator A of method 500A. Alternatively stated, method 500C can be performed either after method 500B or can be immediately performed after method 500A.

Proceeding from indicator A or B, method 500C includes modifying one or more ground assessment criteria based on at least one grouped GTS favored constraint at block 522. For example, for the ground assessment criteria described in the context of method 500B, each criterion can be modified in such a way that would tend to favor a grouped GTS 120. Some examples are subsequently described.

*Signal Strength.* A fixed value or some other modifier can be added to the signal strength of a grouped GTS 120. For example, if the average signal strength of a grouped GTS 120 is 2.3, a value of 2 can be added for a modified signal strength of 4.3. Doing so would cause the grouped GTS 120 to have a higher signal strength than a conventional ground transmitting station 118 (even if the signal strength measured for a conventional ground transmitting station 118 is higher). As another example, lower signal strength measurements can be discarded for a grouped GTS 120 to increase the average signal strength associated with the grouped GTS 120. In yet another example, the highest signal strength value determined for a grouped GTS 120 can be used as the signal strength for a designated periodic interval (e.g., every two or three minutes). Additionally, or alternatively, the signal strength values of conventional ground transmitting station 118 can be reduced (as would be determined based on the frequency of the signals received from the ground transmitting station).

*Datalink Service Provider Preference.* For multiple datalink service providers that are preferred, the datalink service provider that supports grouped ground transmission functionality can be weighted more favorably, even if the datalink service provider ordinarily is lower in preference than another datalink service provider that does not support grouped ground transmission functionality.

*Geographical Region.* If a grouped GTS 120 is known to be in a geographical region, the geographical region associated with at least one grouped GTS 120 is weighted more favorably than a geographical region having no grouped GTS 120. In some embodiments, a geographical region associated with a high concentration of grouped GTS 120 is weighted more favorably than a geographical region associated with a lower concentration of grouped GTS 120.

*Datalink Message Content.* If the message content from a ground transmitting station indicates that the ground transmitting station is a grouped GTS 120, this ground transmitting station can be given higher preference.

*Vehicle Navigation Parameters.* The signal strength variation received from a grouped GTS 120 has more variation than other ground transmitting stations 118 and can be increased (or decreased) based on the navigation parameters of the vehicle, such as the altitude or ascent/descent rate.

*Terrain Features.* The signal strength associated with a grouped GTS 120 can be increased (or decreased) based on the presence of terrain features, such as mountain ranges, oceans, airport terminals, etc.

Proceeding to block 524, method 500C then analyzes each ground transmitting station based on the modified ground assessment criteria. At block 526, method 500C ranks each ground transmitting station based on the analysis conducted at block 524. After ranking each ground transmitting station at block 526, method 500C determines whether a grouped GTS is the highest ranked ground transmitting station at block 528. If a grouped GTS is determined to be the highest ranked ground transmitting station, method 500C proceeds to block 532 and selects the grouped GTS as the primary ground transmitting station; otherwise, method 500C proceeds to block 530 and selects the highest preferred conventional ground transmitting station as the primary ground transmitting station.

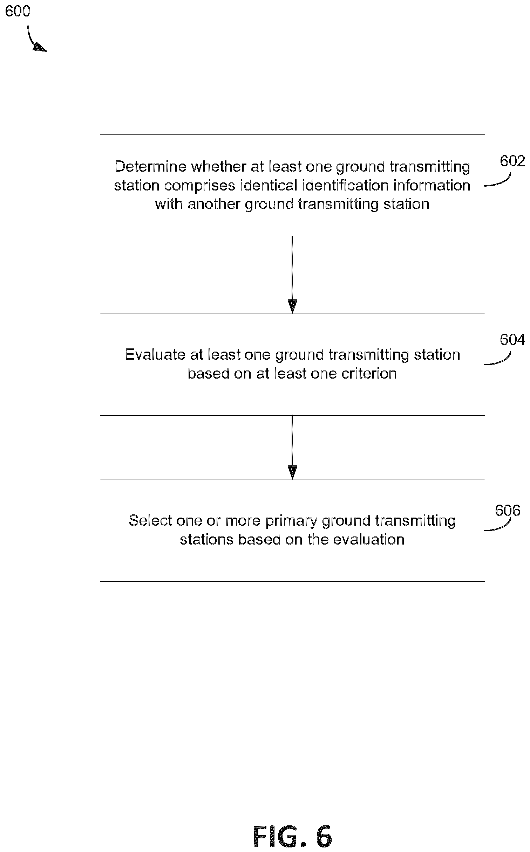

Figure 6 depicts a flow diagram of a method 600 for selecting one or more primary ground transmitting stations. Method 600 can be performed using the methodology described in any of methods 300-500C using, for example, the systems as described with respect to Figures 1-2.

Method 600 includes determining whether at least one ground transmitting station comprises identical identification information with another ground transmitting station at block 602. In doing so, method 600 determines whether the at least one ground transmitting station 118, 120 is a grouped GTS 120. The identical identification information corresponds to, for example, the network address of the at least one ground transmitting station 118, 120. If the network address of the at least one ground transmitting station 118, 120 is identical to the network address of the another ground transmitting station, then the at least one ground transmitting station 118, 120 is determined to be a grouped GTS 120. Exemplary techniques for determining the presence of a grouped GTS 120 are described with respect to methods 300-400.

Proceeding to block 604, method 600 evaluates the at least one ground transmitting station based on at least one criterion for the at least one ground transmitting station. Such criteria are described with respect to methods 500A-500C, but can include other criteria not explicitly identified. In some embodiments, the criteria can be modified based on at least one grouped GTS favored constraint, which makes the grouped GTS 120 more favorable to communicate with from the perspective of the communications management system 106.

Method 600 then proceeds to block 606 and selects a primary ground transmitting station based on the evaluation. For example, where a grouped GTS 120 is present, method 600 selects the grouped GTS as the primary ground transmitting station when the grouped GTS 120 is available to communicate with and/or is the highest preferred ground transmitting station. However, even if a grouped GTS 120 is present, method 600 may select a conventional ground transmitting station 118 as the primary ground transmitting station in some circumstances.

The methods and techniques described herein may be implemented in digital electronic circuitry, or with a programmable processor (for example, a special-purpose processor or a general-purpose processor such as a computer) firmware, software, or in various combinations of each. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instruction to, a data storage system, at least one input device, and at least one output device. Generally, a processor will receive instructions and data from a read-only memory and/or a random-access memory. Storage devices suitable for tangibly embodying computer program instructions and data include all forms of non-volatile memory, including by way of example semiconductor memory devices, such as erasable programmable read-only memory (EPROM), electrically erasable programmable read-only memory (EEPROM), and flash memory devices; magnetic disks such as internal hard disks and removable disks; magneto-optical disks; and the like. Any of the foregoing may be supplemented by, or incorporated in, specially-designed application specific integrated circuits (ASICs).

### EXAMPLE EMBODIMENTS

Example 1 includes a system, comprising: a communications management system configured to be coupled on a vehicle, wherein the communications management system comprises processing circuitry configured for processing datalink messages received from at least one ground transmitting station, wherein the communications management system is configured to determine whether the at least one ground transmitting station comprises identical identification information associated with another ground transmitting station, wherein the communications management system is configured to evaluate the at least one ground transmitting station based on at least one criterion for the at least one ground transmitting station, wherein based on the evaluation of the at least one ground transmitting station, the communications management system is configured to select one or more primary ground transmitting stations for communicating a datalink message with the vehicle.

Example 2 includes the system of Example 1, wherein the at least one ground transmitting station and the another ground transmitting station are grouped transmitting stations that share identical network addresses but reside in different physical locations.

Example 3 includes the system of Example 2, wherein the at least one criterion includes an availability status of the at least one ground transmitting station, wherein the communications management system is configured to select one of the at least one ground transmitting station as the primary ground transmitting station when the at least one ground transmitting station is available to communicate the datalink message.

Example 4 includes the system of any of Examples 1-3, wherein the at least one ground transmitting station includes a first ground transmitting station and a second ground transmitting station, wherein the communications management system is configured to determine that the first ground transmitting station comprises identical identification information associated with the another ground transmitting station, wherein the at least one criterion includes a plurality of criteria, wherein the communications management system is configured to evaluate the first ground transmitting station and the second ground transmitting station based on the plurality of criteria, wherein the communications management system is configured to rank both the first ground transmitting station and the second ground transmitting station based on the evaluation of the plurality of criteria, wherein the communications management system is configured to select one of the first ground transmitting station or the second ground transmitting station based on which of the first ground transmitting station or the second ground transmitting station is a highest ranked ground transmitting station.

Example 5 includes the system of any of Examples 1-4, wherein to determine whether the at least one ground transmitting station comprises identical identification information associated with another ground transmitting station, the communications management system is configured to: determine at least one characteristic of the ground transmitting station and the another ground transmitting station; and determine whether the ground transmitting station comprises identical identification information associated with the another ground transmitting station based on the at least one characteristic.

Example 6 includes the system of Example 5, wherein the at least one characteristic comprises: a rate variation of signals associated with the ground transmitting station, a message frequency of datalink messages received from the ground transmitting station, a datalink service provider associated with the ground transmitting station, and/or information extracted from a datalink message received from the ground transmitting station.

Example 7 includes the system of any of Examples 1-6, wherein to evaluate the at least one ground transmitting station based on at least one criterion for the at least one ground transmitting station, the communications management system is configured to: modify one or more ground assessment criteria based on at least one grouped ground transmitting station favored constraint; analyze the at least one ground transmitting station based on the modified ground assessment criteria; rank the at least one ground transmitting station based on an analysis of the modified ground assessment criteria; and select one of the at least one ground transmitting station with a highest rank as the primary ground transmitting station.

Example 8 includes the system of Example 7, wherein the communications management system is configured to determine that the at least one ground transmitting station comprises identical identification information associated with the another ground transmitting station, wherein the communications management system is configured to select one of the at least one ground transmitting station as the primary ground transmitting station with the highest rank.

Example 9 includes the system of any of Examples 7-8, wherein the one or more ground assessment criteria comprises: a signal strength associated with the at least one ground transmitting station, a datalink service provider associated with the at least one ground transmitting station, a geographical region associated with the at least one ground transmitting station, a datalink message associated with the at least one ground transmitting station, one or more navigation parameters of the vehicle, and/or one or more terrain features.

Example 10 includes a communications management system configured to be mounted on a vehicle, wherein the communications management system comprises at least one processor configured for routing downlink datalink messages received from at least one avionics device and uplink datalink messages received from at least one ground transmitting station, wherein the communications management system is configured to: determine whether the at least one ground transmitting station comprises identical identification information associated with another ground transmitting station; evaluate the at least one ground transmitting station based on at least one criterion for the at least one ground transmitting station; and select one or more primary ground transmitting stations for communicating a datalink message with the vehicle based on the evaluation of the at least one ground transmitting station.

Example 11 includes the communications management system of Example 10, wherein to determine whether the at least one ground transmitting station comprises identical identification information associated with another ground transmitting station, the communications management system is configured to: determine at least one characteristic of the ground transmitting station and the another ground transmitting station; and determine whether the ground transmitting station comprises identical identification information associated with the another ground transmitting station based on the at least one characteristic.

Example 12 includes the communications management system of Example 11, wherein the at least one characteristic comprises: a rate variation of signals associated with the at least one ground transmitting station, a message frequency of datalink messages received from the at least one ground transmitting station, a datalink service provider associated with the at least one ground transmitting station, and/or information extracted from a datalink message received from the at least one ground transmitting station.

Example 13 includes the communications management system of any of Examples 11-12, wherein the at least one characteristic comprises a rate variation of signals associated with the at least one ground transmitting station, wherein the communications management system is configured to determine that the at least one ground transmitting station is a grouped ground transmitting station when the rate variation of the signals exceeds a threshold value.

Example 14 includes the communications management system of any of Examples 11-13, wherein the at least one characteristic comprises a message frequency of datalink messages received from the at least one ground transmitting station, wherein the communications management system is configured to determine that the at least one ground transmitting station is a grouped ground transmitting station when the message frequency of datalink messages exceeds a threshold value.

Example 15 includes the communications management system of any of Examples 11-14, wherein the at least one characteristic comprises a datalink message received from the at least one ground transmitting station, wherein the communications management system is configured to extract information embedded in the datalink message and determine that the at least one ground transmitting station is a grouped ground transmitting station based on the information extracted in the datalink message.

Example 16 includes the communications management system of any of Examples 11-15, wherein the at least one characteristic comprises information of activities associated with the at least one ground transmitting station stored in a database of the communications management system, wherein the communications management system is configured to determine that the at least one ground transmitting station is a grouped ground transmitting station based on the information of activities stored in the database.

Example 17 includes a method for selecting one or more primary ground transmitting stations for communicating datalink messages with a vehicle, comprising: determining that at least one ground transmitting station comprises identical identification information associated with another ground transmitting station; evaluating the at least one ground transmitting station based on at least one criterion for the at least one ground transmitting station; and selecting the one or more primary ground transmitting stations for communicating a datalink message with the vehicle based on the evaluation of the at least one ground transmitting station.

Example 18 includes the method of Example 17, comprising transmitting the datalink message to the one or more primary ground transmitting stations.

Example 19 includes the method of any of Examples 17-18, comprising: modifying one or more ground assessment criteria based on at least one grouped ground transmitting station favored constraint; analyzing the at least one ground transmitting station based on the modified ground assessment criteria; ranking the at least one ground transmitting station based on an analysis of the modified ground assessment criteria; and selecting one of the at least one ground transmitting station with a highest rank as the primary ground transmitting station.

Example 20 includes the method of Example 19, wherein the at least one ground transmitting station comprises a grouped ground transmitting station, and comprising selecting the grouped ground transmitting station as the primary ground transmitting station when the grouped ground transmitting station is the highest ranked ground transmitting station.

Example 21 includes the methods systems or methods of any of Examples 1-20, wherein to determine whether the at least one ground transmitting station comprises identical identification information associated with another ground transmitting station comprises, receiving at least one ground station information frame (GSIF) corresponding to the another ground transmitting station; and determining whether the at least one ground transmitting station comprises identical identification information associated with the another ground transmitting station based on information in the at least one GSIF.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A communications management system configured to be mounted on a vehicle, wherein the communications management system comprises at least one processor configured for routing downlink datalink messages received from at least one avionics device and uplink datalink messages received from at least one ground transmitting station, wherein the communications management system is configured to:
determine whether the at least one ground transmitting station comprises identical identification information associated with another ground transmitting station;
evaluate the at least one ground transmitting station based on at least one criterion for the at least one ground transmitting station; and
select one or more primary ground transmitting stations for communicating a datalink message with the vehicle based on the evaluation of the at least one ground transmitting station.

2. The communications management system of claim 1, wherein to determine whether the at least one ground transmitting station comprises identical identification information associated with another ground transmitting station, the communications management system is configured to:
determine at least one characteristic of the ground transmitting station and the another ground transmitting station; and
determine whether the ground transmitting station comprises identical identification information associated with the another ground transmitting station based on the at least one characteristic.

3. The communications management system of claim 2, wherein the at least one characteristic comprises: a rate variation of signals associated with the at least one ground transmitting station, a message frequency of datalink messages received from the at least one ground transmitting station, a datalink service provider associated with the at least one ground transmitting station, and/or information extracted from a datalink message received from the at least one ground transmitting station.

4. The communications management system of claim 2, wherein the at least one characteristic comprises a rate variation of signals associated with the at least one ground transmitting station, wherein the communications management system is configured to determine that the at least one ground transmitting station is a grouped ground transmitting station when the rate variation of the signals exceeds a threshold value.

5. The communications management system of claim 2, wherein the at least one characteristic comprises a message frequency of datalink messages received from the at least one ground transmitting station, wherein the communications management system is configured to determine that the at least one ground transmitting station is a grouped ground transmitting station when the message frequency of datalink messages exceeds a threshold value.

6. The communications management system of claim 2, wherein the at least one characteristic comprises a datalink message received from the at least one ground transmitting station, wherein the communications management system is configured to extract information embedded in the datalink message and determine that the at least one ground transmitting station is a grouped ground transmitting station based on the information extracted in the datalink message.

7. The communications management system of claim 1, wherein the communications management system is configured to receive at least one ground station information frame (GSIF) corresponding to the at least one ground transmitting station and the another ground transmitting station, wherein the communications management system is configured to determine whether the at least one ground transmitting station comprises identical identification information with the another ground transmitting station based on the at least one GSIF.

8. The communications management system of claim 1, wherein to evaluate the at least one ground transmitting station based on at least one criterion for the at least one ground transmitting station, the communications management system is configured to:
modify one or more ground assessment criteria based on at least one grouped ground transmitting station favored constraint;
analyze the at least one ground transmitting station based on the modified ground assessment criteria;
rank the at least one ground transmitting station based on an analysis of the modified ground assessment criteria; and
select one of the at least one ground transmitting station with a highest rank as the primary ground transmitting station.

9. A method for selecting one or more primary ground transmitting stations for communicating datalink messages with a vehicle, comprising:
determining that at least one ground transmitting station comprises identical identification information associated with another ground transmitting station;
evaluating the at least one ground transmitting station based on at least one criterion for the at least one ground transmitting station; and
selecting the one or more primary ground transmitting stations for communicating a datalink message with the vehicle based on the evaluation of the at least one ground transmitting station.

10. The method of claim 9, wherein the at least one ground transmitting station and the another ground transmitting station are grouped transmitting stations that share identical network addresses but reside in different physical locations.
